# EUROPÄISCHE PATENTANMELDUNG

(11) **EP 3 799 267 A1**
(43) Veröffentlichungstag der Anmeldung: **31.03.2021**
(21) Anmeldenummer: 20195490.6
(22) Anmeldetag: 10.09.2020
(51) Int. Cl.: H02K 3/24, H02K 9/00, H02K 15/00, H02K 15/12

(54) **ELEKTRISCHE ANTRIEBSVORRICHTUNG UND HERSTELLVERFAHREN FÜR EINE WÄRMETAUSCHEREINRICHTUNG, INSBESONDERE ZUR VERWENDUNG BEI EINER ELEKTRISCHEN ANTRIEBSVORRICHTUNG**

(30) Priorität: 25.09.2019 DE 102019214696
(71) Anmelder: Mahle International GmbH, 70376 Stuttgart (DE)
(72) Erfinder: HOFFMANN, Hermann, 70794 Filderstadt (DE); SCHNEIDER, Michael, 63322 Rödermark (DE); SENJIC, Sascha, 70376 Stuttgart (DE); WEIS, Maximilian, 74427 Fichtenberg (DE)
(74) Vertreter: BRP Renaud & Partner mbB Rechtsanwälte Patentanwälte Steuerberater

(57) **Zusammenfassung**

Die vorliegende Erfindung betrifft eine elektrische Antriebsvorrichtung (10) mit einer Statoranordnung (20) und einer Ankeranordnung (42). Die Antriebsvorrichtung (10) umfasst eine Wärmetauschereinrichtung (70) zum Austauschen von Wärmeverlustenergie zwischen der Statoranordnung (20) und/oder der Ankeranordnung (42) einerseits und einem Wärmetauscherfluid andererseits, wobei die Wärmetauschereinrichtung (70) ein von dem Wärmetauscherfluid durchströmbares Fluidkanalsystem (71) umfasst, das wenigstens einen Fluidkanal (72) aufweist. Der Fluidkanal (72) erstreckt sich längs durch die Statoranordnung (20), wobei jeder Fluidkanal (72) an wenigstens einer Statorantriebsmittel-Mantelfläche (63) eines Statorantriebsmittels (61) der Statoranordnung (20) berührend anliegt.

## Beschreibung

Die Erfindung betrifft eine elektrische Antriebsvorrichtung nach dem Oberbegriff des Anspruchs 1 und ferner ein Herstellverfahren für eine Wärmetauschereinrichtung, insbesondere zur Verwendung bei einer elektrischen Antriebsvorrichtung.

Antriebsvorrichtungen, insbesondere elektrische Antriebsvorrichtungen, sind seit langem bekannt und werden vorzugsweise im Bereich der Kraftfahrzeugtechnik eingesetzt, um ein Antriebsmoment und eine Antriebsbewegung bereitzustellen. Beispielsweise werden derartige Antriebsvorrichtungen gerne zum Antreiben eines Stellglieds herangezogen, bei denen es sich beispielsweise im Bereich der Kraftfahrzeugtechnik häufig, um Ventile, Wastegate-Ventile, Drosselklappen oder sogar Scheibenwischer handelt.

Die bekannten elektrischen Antriebsvorrichtungen sind in einem hohen Maße für ihre jeweiligen Aufgaben optimiert und bezüglich der spezifischen Anforderungen bestens angepasst, um insbesondere relativ hohe Antriebsmomente und relativ hohe Antriebsleistungen bereitzustellen. Vor diesem Hintergrund ist es regelmäßig wünschenswert, den gesamt technischen Wirkungsgrad, sozusagen die Effektivität, der elektrischen Antriebsvorrichtungen konstant zu halten oder zu verbessern.

Aber gerade wenn die beschriebenen elektrischen Antriebsvorrichtungen, beispielsweise über einen längeren Zeitraum, in Betrieb sind und relativ hohe Antriebsmomente und relativ hohe Antriebsleistungen bereitstellen, kommt es zu einer Erwärmung der von den elektrischen Antriebsvorrichtungen umfassten Antriebskomponenten.

Die Erwärmung der elektrischen Antriebsvorrichtungen hat dabei vielfältige Ursachen und lässt sich beispielsweise auf den elektrischen ohmschen Widerstand von Spulenanordnungen, auf Ummagnetisierungseffekte innerhalb der elektrischen Antriebsvorrichtungen, auf Wirbelstromverluste oder Lagerreibung zurückführen.

Die Erwärmung solcher elektrischer Antriebsvorrichtungen führt jedenfalls regelmäßig dazu, dass die Antriebskomponenten der elektrischen Antriebsvorrichtungen, beispielsweise Antriebslager oder die Isolation von Spulenanordnungen, relativ starke thermische Belastungen ertragen müssen, wodurch die elektrischen Antriebsvorrichtungen sozusagen aus thermischer Sicht insgesamt relativ hoch beansprucht sind.

Durch die thermische Beanspruchung kann, insbesondere über die wünschenswerterweise relativ hohe Lebensdauer/Standzeit der elektrischen Antriebsvorrichtungen betrachtet, der Wirkungsgrad der elektrischen Antriebsvorrichtungen spürbar verschlechtert werden, beispielsweise infolge einer höheren Stromaufnahme oder durch eine höhere Lagerreibung. Ferner kann die erwähnte Lebensdauer/Standzeit insgesamt herabgesetzt sein, weil beispielsweise die Antriebskomponenten der elektrischen Antriebsvorrichtung thermisch verschleißen.

Obwohl die bekannten elektrischen Antriebsvorrichtungen zur Überwindung des thermischen Problems über Wärmetauschereinrichtungen verfügen, beispielsweise sei an dieser Stelle auf die in der Druckschrift DE 10 2005 052 363 A1 beschriebene Mantel-Kühleinrichtungen verweisen, ist es wünschenswert, die thermische Belastung der elektrischen Antriebsvorrichtungen weiter zu reduzieren, um insbesondere die Lebensdauer/Standzeit von elektrischen Antriebsvorrichtungen weiter zu erhöhen, so dass im Ergebnis beispielsweise noch langlebigere Antriebsvorrichtungen bereitstellbar sind.

Vor diesem Hintergrund liegt die Aufgabe der Erfindung darin, eine verbesserte oder zumindest eine andere Ausführungsform für eine elektrische Antriebsvorrichtung bereitzustellen.

Darüber hinaus besteht die Aufgabe der Erfindung auch darin, ein Herstellungsverfahren für eine Wärmetauschereinrichtung, insbesondere für eine solche elektrische Antriebsvorrichtung, anzugeben.

Bei der vorliegenden Erfindung werden die Aufgaben insbesondere durch die Gegenstände der unabhängigen Ansprüche gelöst. Vorteilhafte Ausführungsformen sind Gegenstand der abhängigen Ansprüche.

Der Grundgedanke der Erfindung basiert auf der Überlegung, die Kühlleistung der aus dem Stand der Technik bekannten Wärmetauschereinrichtungen zu erhöhen.

Während die bekannten Wärmetauschereinrichtungen üblicherweise darauf setzen, die im Betrieb der elektrischen Antriebsvorrichtung entstehende Wärmeverlustenergie am Statorgehäuse oder in der Nähe des Statorgehäuses abzugreifen, schlägt die vorliegenden Erfindung vor, die Wärmeverlustenergie unmittelbar, also sozusagen direkt, an den für die Wärmeverlustenergie verantwortlichen Antriebskomponenten der elektrischen Antriebsvorrichtung abzugreifen. Dabei liegen die die Wärmeverlustenergie abführenden Komponenten der vorgeschlagenen Wärmetauschereinrichtungen zweckmäßigerweise unmittelbar und insbesondere spaltfrei an den für die Wärmeverlustenergie verantwortlichen Antriebskomponenten der elektrischen Antriebsvorrichtung an, also so, dass zwischen diesen Komponenten kein unnötiger Zwischenraum vorhanden ist.

Zur Realisierung dieser Idee ist vorgesehen, dass die elektrische Antriebsvorrichtung, die exemplarisch im Bereich der Kraftfahrzeugtechnik eingesetzt werden kann, mit einem Elektromotor ausgestattet ist, der eine Statoranordnung und eine Ankeranordnung aufweist. Ferner verfügt die elektrische Antriebsvorrichtung über ein Gehäuse, das der Aufnahme der Statoranordnung dient. Beispielsweise ist das Gehäuse aus einem Metallwerkstoff oder seltener aus einem Kunststoffwerkstoff hergestellt.

Ferner ist am Gehäuse eine Rotorachse angeordnet, die längs ihres vorzugsweise kreiszylindrischen Rotorkörpers eine Drehlängsachse definiert. Die Rotorachse ist fest am Gehäuse fixiert und insbesondere einstückig mit dem Gehäuse ausgebildet.

An der Rotorachse ist ein um die Drehlängsachse rotierbar angeordneter Rotor zur Aufnahme der Ankeranordnung vorgesehen. Der Rotor kann beispielsweise von topfförmiger Gestalt sein und eine Topfaufnahme definieren, um die Aufnahme und/oder das Fixieren der Ankeranordnung zu unterstützen. Die Ankeranordnung umfasst beispielsweise eine Permanentmagnetanordnung.

Die vorliegende Erfindung lässt sich natürlich auch auf Elektromotoren anwenden, deren Ankeranordnung und Statoranordnung sozusagen vertauscht angeordnet sind, also auf Elektromotoren, deren Ankeranordnung am Gehäuse angeordnet und deren Statoranordnung am Rotor angeordnet ist. Mit anderen Worten, die vorliegende Erfindung lässt sich auf Innen- und Außenläufer-Elektromotoren anwenden.

Die Statoranordnung umfasst ein oder mehrere Statorantriebsmittel, die jeweils an einem Bestückungsabschnitt der Statoranordnung angeordnet sind. Die Statorantriebsmittel erstrecken sich längs der Drehlängsachse. Die einzelnen Statorantriebsmittel bilden dabei im Gesamten die Statoranordnung und umfassen exemplarisch jeweils eine Spulenwicklungsanordnung. Die Statorantriebsmittel können einzeln oder zusammen mittels einer Elektromotor-Steuereinrichtung betrieben werden.

Weiterhin umfasst die Statoranordnung einen oder mehrere Kanalführungsabschnitte, die zweckmäßigerweise zwischen den Bestückungsabschnitten angeordnet sind. Ein Kanalführungsabschnitt bildet sozusagen einen freien Spalt zwischen zwei benachbarten Bestückungsabschnitten. Beispielsweise sind die Kanalführungsabschnitte und die Bestückungsabschnitte in einer Aufreihungsrichtung aneinander alternierend angeordnet, wobei die Aufreihungsrichtung insbesondere durch eine quer oder orthogonal zur Drehlängsachse orientierte Umfangsrichtung definiert sein kann.

Wesentlich ist, dass die elektrische Antriebsvorrichtung eine Wärmetauschereinrichtung zum Austauschen von Wärmeverlustenergie zwischen der Statoranordnung und/oder der Ankeranordnung einerseits und einem Wärmetauscherfluid andererseits umfasst. Zweckmäßigerweise handelt es sich bei dem Wärmetauscherfluid um Wasser oder ein Wasser-Glykol-Gemisch, das sozusagen als Wärmeträger fungiert.

Die Wärmetauschereinrichtung umfasst ihrerseits ein von dem Wärmetauscherfluid durchströmbares Fluidkanalsystem, das wenigstens einen Fluidkanal oder einen Satz von Fluidkanälen aufweist, die sich insbesondere längs oder parallel der Drehlängsachse durch die Statoranordnung erstrecken, insbesondere teilweise oder vollständig. Jeder Fluidkanal liegt dabei an wenigstens einer quer oder einer radial bezüglich der Drehlängsachse orientierten Statorantriebsmittel-Mantelfläche eines Statorantriebsmittels berührend, also spaltfrei, an.

Diese Gestaltung hat den Effekt, dass die Wärmeverlustenergie praktisch vollständig durch Wärmeleitung (Wärmekonduktion) und somit nur teilweise oder praktisch gar nicht über Wärmekonvektion erfolgt. Das hat den Vorteil, dass die in der Antriebsvorrichtung bereitgestellte Wärmeverlustenergie relativ zügig auf ein Wärmetauscherfluid übertragen und anschließend aus der elektrischen Antriebsvorrichtung abgeführt werden kann, beispielweise zu einem Wärmetauscherfluid-Kühler. Das hat ferner den Vorteil, dass mit der vorgeschlagenen Wärmetauscheranordnung ausgestattete Antriebsvorrichtungen eine relativ hohe Lebensdauer/Standzeit erreichen können.

Die elektrischen Antriebsvorrichtungen können im Vergleich mit herkömmlichen elektrischen Antriebsvorrichtungen also relativ kühl gehalten werden, so dass man auch sagen kann, dass der Wärmehaushalt der elektrischen Antriebsvorrichtungen optimiert ist.

Jeder oder wenigstens ein Fluidkanal liegt flächig oder vollflächig und/oder spaltfrei an einer der Statorantriebsmittel-Mantelflächen berührend an. Das hat den Effekt, dass zwischen den Fluidkanälen oder den Fluidmantelflächen der Fluidkanäle und den Statorantriebsmittel oder den Statorantriebsmittel-Mantelflächen kein unnötiger, beispielsweise mit Luft gefüllter, Zwischenspalt vorhanden ist. Dadurch wird die Wärmeleitung, insbesondere Wärmekonduktion, von den Statorantriebsmitteln hin zu den von Wärmetauscherfluid durchströmten Fluidkanälen verbessert, weil die in den Statorantriebsmitteln zwangsweise im Betrieb der elektrischen Antriebsvorrichtungen erzeugte Wärmeverlustenergie direkt abgeführt werden kann und nicht, wie seither insbesondere durch Wärmekonvektion abgeführt wird. Dadurch wird erreicht, dass die Wärmeverlustenergie relativ zügig von den Statorantriebsmitteln hin zum Wärmetauscherfluid geführt werden kann, so dass die elektrische Antriebsvorrichtung insgesamt relativ kühl bleibt, auch wenn sie im Betrieb ein hohes Antriebsmoment und eine hohe Antriebsleistung bereitstellt. Das hat weiterhin den Vorteil, dass die Antriebskomponenten der elektrischen Antriebsvorrichtungen einer geringeren thermischen Belastung ausgesetzt sind, so dass im Ergebnis die Lebensdauer/Standzeit der elektrischen Antriebsvorrichtungen, die mit einer solchen Wärmetauschereinrichtung ausgestattet sind, spürbar erhöht ist.

Zweckmäßig ist die elektrische Antriebsvorrichtung mit Fluidkanälen ausgerüstet, die zweckmäßigerweise aus Kunststoffmaterial hergestellt sind, insbesondere aus einem Thermoplastmaterial.

Es ist möglich, dass mehrere Kanalführungsabschnitte und mehrere Bestückungsabschnitte in einer Umfangsrichtung um die Drehlängsachse herum alternierend angeordnet sind, wobei jeder Kanalführungsabschnitt einen Fluidkanal und jeder Bestückungsabschnitt ein Statorantriebsmittel aufweist. Einzelne Statorantriebsmittel sind daher sozusagen in Umfangsrichtung zu beiden Seiten hin durch jeweils einen Kanalführungsabschnitt voneinander getrennt.

Weil in den Kanalführungsabschnitten jeweils ein Fluidkanal angeordnet ist, kann ein dazwischenliegendes Statorantriebsmittel von zwei Seiten her gekühlt werden, so dass Wärmeverlustenergie von zwei Seiten her abgeführt und dem durch die Fluidkanäle strömenden Wärmetauscherfluid zugeführt werden kann.

Grundsätzlich ist denkbar, dass in einem Kanalführungsabschnitt jeweils zwei oder mehr Fluidkanäle angeordnet sind, die aneinander und an den Bestückungsabschnitten flächig angelegt sind.

Um zu erreichen, dass die Wärmeverlustenergie noch zügiger von den Statorantriebsmittel hin zum Wärmetauscherfluid geführt werden kann, wird bevorzugt, dass einer oder jeder Fluidkanal flächig oder vollflächig und/oder spaltfrei an mindestens einem Statorantriebsmittel-Mantelflächen-Umfangsabschnitt einer der Statorantriebsmittel-Mantelflächen anliegt. Ein oder jeder Statorantriebsmittel-Mantelflächen-Umfangsabschnitt ist zwischen einem Bestückungsabschnitt einerseits und einem Kanalführungsabschnitt andererseits grenzartig angeordnet, zweckmäßigerweise weisen die Statorantriebsmittel-Mantelflächen-Umfangsabschnitte jeweils eine Flächennormale auf, die in einer Umfangsrichtung um die Drehlängsachse orientiert sind.

Insbesondere kann eine bezüglich der Drehlängsachse quer orientierte Fluidkanalquerschnittsfläche eines oder jedes Fluidkanals mit einer Querschnittfläche eines Kanalführungsabschnitts flächenmäßig deckungsgleich sein. Dabei kann jeder Kanalführungsabschnitt in einer Umfangsrichtung um die Drehlängsachse herum zwischen zwei benachbarten Bestückungsabschnitten und quer zur Drehlängsachse durch das Gehäuse begrenzt sein.

Zweckmäßigerweise kann jede Statorantriebsmittel-Mantelfläche oder jeder Statorantriebsmittel-Mantelflächen-Umfangsabschnitt eine Spulenwindungsoberfläche bilden, die von einer an dem jeweiligen Bestückungsabschnitt angeordneten Spulenwindungsanordnung gebildet ist, wobei die Spulenwindungsanordnung eine Mehrzahl von quer oder längs zur Drehlängsachse orientierte Spulenwindungen umfasst. Zweckmäßigerweise ist die Spulenwindungsoberfläche einer Spulenwindungsanordnung dabei durchgängig wellenförmig und weist eine Spulenoberflächenkontur auf, die sich parallel der Drehlängsachse oder quer zur Drehlängsachse aus sich aneinander reihenden wellenförmigen ineinander übergehende Abschnitten zusammensetzt. Die Fluidkanäle des ersten Satzes sind dabei zweckmäßigerweise spaltfrei komplementär an den Spulenoberflächenkonturen der Spulenwindungsanordnungen angeformt, so dass die Fluidkanäle des ersten Satzes eine Art Negativ-Spulenoberflächenkontur bilden, die beispielsweise als Sägezahnkontur beschrieben werden kann.

Um eine kostengünstige Herstellung der Wärmetauschereinrichtung zu gewährleisten, kann ein Fluidkanal jeweils von hohlzylindrischer Gestalt sein und einen durchgängig kreisringartigen, runden, ovalen oder vieleckigen Querschnitt bezogen auf seine Hauptausdehnungsrichtung aufweisen.

Bevorzugt ist ferner, wenn ein Fluidkanal aus einem dünnwandigen Kunststoff-Rohrmaterial, insbesondere aus einem Thermoplast-Rohrmaterial, hergestellt ist.

Um relativ viel Wärmeverlustenergie aus der Antriebsvorrichtung abführen zu können, ist es von Vorteil, wenn das Fluidkanalsystem sozusagen eine relativ große Tauscherfläche zum Austauschen von Wärmeverlustenergie mit der Antriebsvorrichtung aufweist. Daher ist es Vorteil, wenn sich wenigstens ein oder alle Fluidkanäle teilweise oder vollständig durch die Statoranordnung oder teilweise oder vollständig durch einen Kanalführungsabschnitt der Statoranordnung in Richtung der Drehlängsachse erstrecken.

Weiterhin kann das Fluidkanalsystem wenigstens eine Fluidzulauföffnung und wenigstens eine Fluidablauföffnung umfassen, durch die hindurch Wärmetauscherfluid in wenigstens einen Fluidkanal strömen kann. Dies hat den Effekt, dass das Fluidkanalsystem der Wärmetauschereinrichtung mit Wärmetauscherfluid versorgt werden kann. Für die Versorgung mit Wärmetauscherfluid eignet sich beispielsweise eine Versorgungseinrichtung oder dergleichen. Jedenfalls ist die Versorgungseinrichtung beispielsweise mittels Versorgungschläuchen mit der Fluidzulauföffnung und/oder mit der Fluidablauföffnung verbindbar, so dass beispielsweise Wärmetauscherfluid ausgehend von der Versorgungseinrichtung in das Fluidkanalsystem der Wärmetauschereinrichtung gepumpt werden kann. Die elektrische Antriebsvorrichtung kann dadurch von Wärmetauscherfluid durchströmt werden. Die Versorgungseinrichtung kann ihrerseits zweckmäßigerweise mit einer Kühleinrichtung verbunden sein, beispielsweise mit einer weiteren Wärmetauschereinrichtung, die das erwärmte Wärmetauscherfluid kühlt. Man kann also auch sagen, dass durch die Fluidzulauföffnung hindurch Wärmetauscherfluid an wenigstens einem Fluidkanal bereitgestellt werden kann und dass durch die Fluidablauföffnung hindurch aus einem Fluidkanal abströmendes Wärmetauscherfluid abgeführt werden kann.

Zweckmäßigerweise ist zwischen einer Fluidzulauföffnung des Fluidkanalsystems und wenigstens einem Fluidkanal und/oder zwischen einer Fluidablauföffnung des Fluidkanalsystems und wenigstens einem Fluidkanal ein Fluidreservoir zum Sammeln und Zwischenspeichern von Wärmetauscherfluid angeordnet. Der Begriff Fluidreservoir bedeutet im Rahmen dieser Beschreibung, dass ein Fluidvorrat gebildet ist, der Wärmetauscherfluid bevorraten kann. Mit anderen Worten, kann mittels des oder der Fluidreservoire ein vorgegebenes oder vorgebbares Fluidvolumen insbesondere ein Wärmetauscherfluidvolumen innerhalb des Fluidkanalsystems zwischengespeichert werden, um beispielsweise eine ungleichmäßige Versorgung seitens der Versorgungseinrichtung auszugleichen. Das hat den Vorteil, dass das Fluidkanalsystem und/oder die Wärmetauschereinrichtung in jedem Fall mit Wärmetauscherfluid versorgt sind, so dass eine Kühlung der elektrischen Antriebsvorrichtung gewährleistet werden kann.

Im Betrieb der elektrischen Antriebsvorrichtung sind ein oder mehrere Fluidkanäle an einem oder zwei Kanalflansche angeordnet, um das Fluidkanalsystem bzw. die Wärmetauschereinrichtung zu bilden.

Dabei ist es zweckmäßig, wenn die Fluidkanäle jeweils zwei zueinander entgegengesetzt orientierte freie Enden aufweisen, so dass die Fluidkanäle jeweils mit einem ersten freien Ende an einem ersten Kanalflansch und mit dem anderen, zweiten freien Ende an einem zweiten Kanalflansch fixierbar sind.

Dabei sind die Fluidkanäle jeweils stoff-, form- oder kraftschlüssig an dem jeweiligen Kanalflansch angeordnet, beispielsweise sind die Fluidkanäle an die jeweiligen Kanalflansche angegossen. Angießen heißt zweckmäßigerweise, dass die freien Enden der Fluidkanäle und/oder die Öffnungen der Kanalflansche bis zu ihrer jeweiligen Schmelztemperatur erwärmt und aneinander angeordnet und insb. mittels einer extern aufzubringenden Fügekraft miteinander verpresst werden. Weiterhin können die freien Enden der Fluidkanäle und/oder die Öffnungen der Kanalflansche miteinander verklebt sein, insb. mittels eines handelsüblichen Klebstoffes. Die freien Enden der Fluidkanäle können nach der Montage der Kanalflansche so ausgeformt sein, dass zusätzlich ein Dichtmittel, insb. ein Dichtring, ein O-Ring oder eine entsprechend konturierte Dichtfolie, eingebracht werden kann. Durch die Anordnung der Fluidkanäle an Kanalflansche wird insgesamt ein Fluidkanalsystem bzw. eine Wärmetauschereinrichtung bereitgestellt, die eine elektrische Antriebsvorrichtung relativ gut kühlen kann, insb. im Vergleich mit seither bekannten Lösungen. Ferner lassen sich die Fluidkanäle auf diese Weise relativ gut abdichten, so dass diese leckagefrei, insb. praktisch leckagefrei, an einem Kanalflansch angeordnet werden können.

Zweckmäßigerweise können die an einem oder zwei Kanalflansche angeordneten Fluidkanäle einen Satz von mehreren Zulaufkanälen und einen Satz von mehreren Rücklaufkanälen bilden, wobei durch die Zulaufkanäle hindurch Wärmetauscherfluid in das Fluidkanalsystems hinein strömen kann, um die Antriebsvorrichtung zu kühlen, während erwärmtes Wärmetauscherfluid durch die Rücklaufkanäle hindurch aus dem Fluidkanalsystem abströmen kann.

Es ist möglich, dass die Zulaufkanäle und die Rücklaufkanäle jeweils ein erstes und ein zweites freies Ende aufweisen, wobei die Zulaufkanäle und die Rücklaufkanäle dann zweckmäßigerweise mit jeweils einem ersten freien Ende entlang einer an einem ersten Kanalflansch angeordneten imaginären Kanalflansch-Kreislinie mit gegenseitigem Abstand zueinander in Umfangsrichtung der imaginären Kanalflansch-Kreislinien angeordnet sind. Dabei ist es zweckmäßig, wenn die Zulaufkanäle und die Rücklaufkanäle mit dem zweiten freien Ende entlang einer an einem zweiten Kanalflansch angeordneten imaginären Kanalflansch-Kreislinie mit gegenseitigem Abstand zueinander in Umfangsrichtung der imaginären Kanalflansch-Kreislinien angeordnet sind, wodurch im Ganzen eine käfigartige Wärmetauschereinrichtung oder Fluidkanalsystem gebildet wird. Hierdurch lassen sich die Fluidkanäle relativ gut abdichten, so dass diese leckagefrei am ersten und/oder zweiten Kanalflansch angeordnet werden können. Dadurch wird ferner der Vorteil erzielt, dass die Anzahl der Fluidkanäle der Anzahl von Statorantriebsmitteln (Pole) entspricht.

Vorteilhafterweise können die Zulaufkanäle und die Rücklaufkanäle jeweils winkelig, insbesondere rechtwinkelig, an den Kanalflanschen angeordnet sein. Jeder Kanalflansch kann eine ihn vollständig durchsetzende Zentralausnehmung aufweisen. Ferner kann ein oder jeder Kanalflansch eine weitere sozusagen zusätzliche Ausnehmung, insbesondere eine Ringausnehmung, aufweisen, die den jeweiligen Kanalflansch von einer Vordergroßseitenfläche oder einer Rückgroßseitenfläche des jeweiligen Kanalflansches her lediglich teilweise, exemplarisch bis zur halben Höhe, durchsetzt.

Jedenfalls kann die Ausnehmung, insbesondere die Ringausnehmung, einen runden, ovalen oder vieleckigen Querschnitt aufweisen und eine mit den Zulaufkanälen und den Rücklaufkanälen fluidische Verbindung ausbilden, so dass Wärmetauscherfluid zwischen einem von der Ausnehmung im Betrieb der elektrischen Antriebsvorrichtung gebildeten Fluidreservoir zum Sammeln und Überströmen von Fluid und den Zulaufkanälen und den Rücklaufkanälen hin und her strömen kann.

Die Zulaufkanäle und die Rücklaufkanäle sind jeweils zweckmäßigerweise so an die Kanalflansche angeordnet, dass sie im Betrieb der elektrischen Antriebsvorrichtung mit ihren freien Enden in die Ausnehmung, insbesondere die Ringausnehmung, des jeweiligen Kanalflanschs hineinragen. Dadurch kann Wärmetauscherfluid von der ein Fluidreservoir bildenden Ausnehmung in die Zulaufkanäle strömen und/oder von den Rücklaufkanälen zurück in die Ausnehmung strömen.

Insbesondere können die Zulaufkanäle und die Rücklaufkanäle im Betrieb der Antriebsvorrichtung jeweils im Wesentlichen parallel oder parallel zueinander und/oder zur Drehlängsachse angeordnet sein.

Jedenfalls können an einem oder jedem Kanalflansch Deckel angeordnet sein, die ringsum spaltfrei und fluiddicht am jeweiligen Kanalflansch berührend anliegen. Der Deckel ist exemplarisch aus demselben Material hergestellt, wie die Kanalflansche, beispielsweise aus Kunststoffmaterial, insbesondere einem Thermoplastmaterial. Zwischen einem oder jedem Deckel und dem jeweiligen Kanalflansch kann die erwähnte ein Fluidreservoir bildende Ausnehmung, insbesondere die Ringausnehmung, angeordnet sein, die praktischerweise mit den Zulaufkanälen und den Rücklaufkanälen fluidisch in Verbindung steht.

Ferner kann vorgesehen sein, dass an einem oder jedem Deckel oder Kanalflansch eine Versorgungseinrichtung angeordnet ist, die das Fluidkanalsystem mit Wärmetauscherfluid versorgt. Die Versorgungseinrichtung hat hierzu zweckmäßigerweise einen Versorgungskanal und einen Entsorgungskanal, die jeweils an der Fluidzulauföffnung des Fluidkanalsystems beziehungsweise an der Fluidablauföffnung des Fluidkanalsystems angeordnet werden können.

An einem oder jedem Deckel kann eine Trennstruktur angeordnet sein, die im auf den jeweiligen Kanalflansch aufgesetzten Zustand in die Ausnehmung der Kanalflansche, insbesondere in die Ringausnehmung, hineinragt und am jeweiligen Kanalflansch berührend anliegt. Dadurch ist die zwischen dem Deckel und dem jeweiligen Kanalflansch angeordnete Ausnehmung, insbesondere die Ringausnehmung, in wenigstens zwei voneinander getrennte, ins. fluidisch getrennte, Ringraumabschnitte aufgeteilt. Hierdurch können zwei oder mehr voneinander getrennte, insb. fluidisch getrennte, Fluidwege des Wärmetauscherfluids realisiert werden. Exemplarisch können die Zulaufkanäle ausgehend von einer Fluidzulauföffnung des Fluidkanalsystems durch einen ersten Ringraumabschnitt eines ersten Kanalflansches hindurch mit Wärmetauscherfluid versorgt werden. Dann strömt das Wärmetauscherfluid von den Zulaufkanälen in einen ersten Ringraumabschnitt eines zweiten Kanalflansches, um dort von diesem ersten Ringraumabschnitt zu den Rücklaufkanälen zu gelangen, um durch die Rücklaufkanäle in einen zweiten Ringraumabschnitt des ersten Kanalflansches zu kommen, um wiederum von dort zu einer Fluidablauföffnung des Fluidkanalsystems zu strömen. Insb. kann der zweite Kanalflansch eine blütenartige Trennstruktur aufweisen, die insb. zwei Ringraumabschnitte gegeneinander abtrennt, die jeweils einen Vorlauf- und einen Rücklaufkanal miteinander verbindet. Ferner ist zu erwähnen, dass die Trennstruktur am Deckel die Fluidzulauföffnungen unterteilt, vorzugsweise für eine gleichmäßige Wärmeverteilung. Beispielsweise werden die jeweils, insb. unmittelbar, nebeneinander liegenden Kanäle jeweils in einen Versorgungskanal und einen Entsorgungskanal aufgeteilt, welche dann auf der jeweiligen Rückseite miteinander verbunden sind.

Ferner kann die Trennstruktur wenigstens einen am Deckel angeordneten Trennsteg umfassen, der die am jeweiligen Kanalflansch angeordneten Fluidkanäle jeweils blütenartig oder mäanderartig umrahmt und die Ausnehmung, insbesondere die Ringausnehmung, in der oben beschriebenen Art unterteilt, in dem der Trennsteg an dem jeweiligen Kanalflansch berührend anliegt.

Der Trennsteg kann aus einem Kunststoffmaterial hergestellt sein, beispielsweise einem Thermoplastmaterial. Natürlich kann auch ein anderes Material zur Realisierung genutzt werden, beispielsweise ein Metallmaterial.

Die Erfindung umfasst den weiteren Grundgedanken, ein Herstellverfahren für eine Wärmetauschereinrichtung anzugeben, insbesondere zur Verwendung bei einer elektrischen Antriebsvorrichtung, wie sie vorstehend beschrieben ist.

Das vorgeschlagene Herstellverfahren umfasst dazu mehrere Schritte, nämlich gemäß einem ersten Schritt das Einsetzen aus einem Kunststoffmaterial, insbesondere einem Thermoplastmaterial, hergestellten Fluidkanal-Rohlingen in eine Statoranordnung der elektrischen Antriebsvorrichtung. Die Fluidkanal-Rohlinge sind exemplarisch hohlzylindrische Rohkunststoffkörper mit einem runden, ovalen oder vieleckigen Querschnitt bezogen auf ihre Hauptausdehnungsrichtung. Jedenfalls werden die Fluidkanal-Rohlinge vorzugsweise in freie Kanalführungsabschnitte der Statoranordnung eingesetzt. Die Kanalführungsabschnitte sind zweckmäßigerweise zwischen Bestückungsabschnitten zum Aufnehmen von Statorantriebsmittel der Statoranordnung angeordnet; sie grenzen also die Bestückungsabschnitte gegenseitig zumindest in einer Umfangsrichtung ab. Die Kanalführungsabschnitte und die Bestückungsabschnitten können beispielsweise in einer Umfangsrichtung um die Drehlängsachse des Rotorkörpers herum aneinander alternierend angeordnet sein.

Man kann sich beispielsweise vorstellen, dass alle Fluidkanal-Rohlinge gemeinsam in die freien Kanalführungsabschnitte eingesetzt oder eingeschoben werden, wobei sie beispielsweise an einem oder zwei die Kanalführungsabschnitte voneinander trennenden Bestückungsabschnitten zunächst punkt oder linienförmig anliegen. Das hat den Effekt, dass die Fluidkanal-Rohlinge relativ einfach an der Statoranordnung angeordnet werden können, beispielsweise im Rahmen eines automatisierten Einschiebevorgangs.

Gemäß einem zweiten Schritt ist vorgesehen, dass die Fluidkanal-Rohlinge erwärmt werden. Die Erwärmung erfolgt zweckmäßigerweise bis die Fluidkanal-Rohlinge jeweils über ihre jeweilige Glasübergangstemperatur erwärmt sind. Dabei kann die Glasübergangstemperatur ganz unterschiedlich ausfallen, ganz in Abhängigkeit des verwendeten Kunststoffmaterials, insbesondere bei einem Thermoplastmaterial. Beispielsweise sind für teilkristalline Thermoplasten Glasübergangstemperaturbereiche von etwa -50 °C bis hin zu etwa 150 °C bekannt. Ferner sind beispielsweise für amorphe Thermoplasten Glasübergangstemperaturbereiche von etwa 80 °C bis hin zu etwa 225 °C bekannt. Weitere Glasübergangstemperaturen sind beispielswiese für Polyamid 66 (PA66), 47°C bis 258°C, für Polyamid 6 (PA6) 60°C bis 220°C und für Polypropylen (PP) 0°C bis 165°C.

Jedenfalls hat dieses Vorgehen den Zweck, die aus Kunststoffmaterial hergestellten Fluidkanal-Rohlinge weich und formbar zu machen, so dass in einem anschließenden Schritt eine Druckbeaufschlagen, insbesondere eine Innendruckbeaufschlagung, der Fluidkanal-Rohlinge erfolgen kann. Weil die Fluidkanal-Rohlinge erwärmt und deshalb relativ weich und formbar sind, weiten sie sich jeweils bezüglich ihrer Hauptausdehnungsrichtung im Rahmen der Druckbeaufschlagung radial oder quer auf. Vergleicht man eine bezüglich der Hauptausdehnungsrichtung eines Fluidkanal-Rohlings quer orientierte Fluidkanalquerschnittsfläche eines oder jedes Fluidkanal-Rohlings vor dem Erwärmen und Beaufschlagen mit Innendruck mit einer Fluidkanalquerschnittsfläche eines oder jedes Fluidkanal-Rohlings nach dem Erwärmen und Beaufschlagen mit Innendruck, so kann man feststellen, dass die jeweiligen Fluidkanalquerschnittflächen sozusagen flächenmäßig an Größe gewonnen haben und praktischerweise den Spalt zwischen zwei Statorantriebsmitteln (Pole), also zwischen en Bestückungsflächen, insbesondere vollständig, auffüllt.

Mit anderen Worten füllen die Fluidkanalquerschnittflächen der Fluidkanal-Rohlinge die jeweilige Querschnittsfläche eines Kanalführungsabschnittes vollständig, so dass man sagen könnte, dass Fluidkanalquerschnittflächen praktisch identisch oder deckungsgleich mit den jeweiligen Querschnittsflächen der Kanalführungsabschnitte sind.

Ferner kann in einem weiteren Schritt vorgesehen sein, die Druckbeaufschlagung der Fluidkanal-Rohlinge über eine vorgegebene oder vorgebbare Zeitspanne aufrechtzuerhalten. Dadurch wird erreicht, dass die Fluidkanal-Rohlinge maximal radial geweitet werden können, wodurch Fluidkanal-Rohling-Mantelflächen der Fluidkanal-Rohlinge an Statorantriebsmittel-Mantelflächen von Statorantriebsmitteln der Statoranordnung flächig berührend und zweckmäßigerweise spaltfrei und zweckmäßigerweise vollständig flächig berührend anlegbar sind.

Gemäß einem fünften Schritt ist ein Abkühlvorgang vorgesehen, in dessen Rahmen die Fluidkanal-Rohlinge abkühlen. Beispielsweise kann während dieses Schrittes der Innendruck in den Fluidkanal-Rohlingen aufrechterhalten werden. Dadurch wird der Vorteil erzielt, dass die Fluidkanal-Rohlinge nicht in ihre Ausgangsform zurückfedern. Während des Abkühlvorgangs kann vorgesehen sein, dass die Fluidkanal-Rohlinge mit Druckluft durchspült werden, um den Abkühlvorgang zu beschleunigen.

Ferner ist in einem sechsten Schritt vorgesehen, dass an die nun vollständig oder zumindest teilweise abgekühlten Fluidkanal-Rohlinge, die man nun auch als Fluidkanäle bezeichnen kann, ein erster Kanalflansch angespritzt wird. Zweckmäßigerweise wird der Kanalflansch dabei an einem freien ersten Enden der Fluidkanal-Rohlinge angespritzt oder angegossen, so dass der Kanalflansch sozusagen an den Enden der Fluidkanal-Rohlinge fest und zweckmäßigerweise unlöslich angeordnet ist.

Anschließend kann an einem freien zweiten Enden der Fluidkanal-Rohlinge ein zweiter Kanalflansch angeordnet, insbesondere angespritzt oder angegossen werden, so dass im Ganzen ein käfigartiges Fluidkanalsystem erzeugt ist.

Der erste und zweite Kanalflansch bestehen jeweils beispielsweise aus einem Kunststoffmaterial, beispielsweise aus dem gleichen Kunststoffmaterial, wie die Fluidkanal-Rohlinge, vorzugsweise aus einem Thermoplastmaterial. Anderer Materialien sind allerdings auch vorstellbar.

Nach dem Anordnen des ersten und zweiten Kanalflansches an den Fluidkanälen, ist im Rahmen eines weiteren Schrittes vorgesehen, jeweils einen Deckel auf die Kanalflansche aufzusetzen, wobei zwischen einem Kanalflansch und einem Deckel ein Fluidreservoir gebildet ist. Beispielsweise wird dabei eine volumengenerierende Ausnehmung am Kanalflansch, insbesondere eine Ringausnehmung, genutzt.

Ferner kann ein oder jeder Deckel eine Trennstruktur zum Trennen einer ein Fluidreservoir bildenden Ausnehmung, insbesondere eine Ringausnehmung, aufweisen, wobei die Ausnehmung exemplarisch in unterschiedliche gegenseitig fluiddicht abgedichtete Ringraumabschnitte unterteilt ist.

Durch das Herstellungsverfahren wird der Vorteil erreicht, dass die vorgeschlagene elektrische Antriebsvorrichtung und/oder die vorgeschlagene Wärmetauschereinrichtung relativ günstig herstellbar sind, beispielsweise im Rahmen einer automatisierten Herstellung.

Die Fluidkanäle können selbstverständlich integraler Bestandteil eines Kanalflansches sein, also sozusagen einstückig mit einem Kanalflansch ausgebildet sein, so dass lediglich ein weiterer Kanalflansch montiert werden muss, um eine Fluidkanalsystem bzw. eine Wärmetauschereinrichtung zu bilden. Dadurch wird die Herstellung einer Wärmetauschereinrichtung vereinfacht und kostengünstiger.

Zweckmäßigerweise kann vorgesehen sein, dass die Fluidkanäle jeweils als separate Teile und beispielsweise als Einlegeteile gestaltet sind.

Zusammenfassend bleibt festzuhalten: Die vorliegende Erfindung betrifft bevorzugt eine elektrische Antriebsvorrichtung mit einer Statoranordnung und einer Ankeranordnung. Die Antriebsvorrichtung umfasst eine Wärmetauschereinrichtung zum Austauschen von Wärmeverlustenergie zwischen der Statoranordnung und/oder der Ankeranordnung einerseits und einem Wärmetauscherfluid andererseits, wobei die Wärmetauschereinrichtung ein von dem Wärmetauscherfluid durchströmbares Fluidkanalsystem umfasst, das wenigstens einen Fluidkanal aufweist. Der Fluidkanal erstreckt sich längs durch die Statoranordnung, wobei jeder Fluidkanal an wenigstens einer Statorantriebsmittel-Mantelfläche eines Statorantriebsmittels der Statoranordnung berührend anliegt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Längsschnittansicht einer bevorzugten elektrischen Antriebsvorrichtung,
- Fig. 2: eine Querschnittansicht der elektrischen Antriebsvorrichtung aus Fig. 1 gemäß einer dort punktiert dargestellten Schnittlinie II-II,
- Fig. 3: eine perspektivische Ansicht einer an einer Statoranordnung angeordneten Wärmetauschereinrichtung einer elektrischen Antriebsvorrichtung, wobei zu Gunsten der Erkennbarkeit ein Kanalflansch entfernt ist,
- Fig. 4: eine perspektivische Ansicht der Wärmetauschereinrichtung aus Fig. 3, wobei die Statoranordnung wieder zu Gunsten der Erkennbarkeit der Wärmetauschereinrichtung entfernt sind,
- Fig. 5: eine perspektivische Ansicht der Wärmetauschereinrichtung aus Fig. 4 gemäß dem dortigen Pfeil V,
- Fig. 6: eine weitere perspektivische Ansicht der Wärmetauschereinrichtung aus Fig. 3, wobei die Statoranordnung zu Gunsten der Erkennbarkeit der Wärmetauschereinrichtung entfernt und an den Fluidkanälen ein zweiter Kanalflansch angeordnet ist,
- Fig. 7: eine Schnittansicht der Wärmetauschereinrichtung aus Fig. 4 und 6 gemäß einer dort durch Pfeile VII-VII angedeuteten Schnittebene,
- Fig. 8: in einer vergrößerten Schnittansicht ein in Fig. 7 durch einen punktierten Rahmen eingefasstes Detail aus Fig. 7,
- Fig. 9 und 10: jeweils in einer perspektivischen Ansicht einen einzelnen Kanalflansch aus Fig. 4 und 5 gemäß den dortigen Pfeilen IX und X,
- Fig. 11: eine perspektivische Ansicht eines eine blütenförmige Trennstruktur aufweisenden Deckels,
- Fig. 12 und 13: jeweils eine Schnittansicht des Deckels aus Fig. 11 gemäß dort durch Pfeile XII-XII bzw. XIII-XIII angedeuteten Schnittlinien,
- Fig. 14: in einer Vorderansicht den Deckel gemäß Fig. 12 gemäß dem dortigen Pfeil XIV.

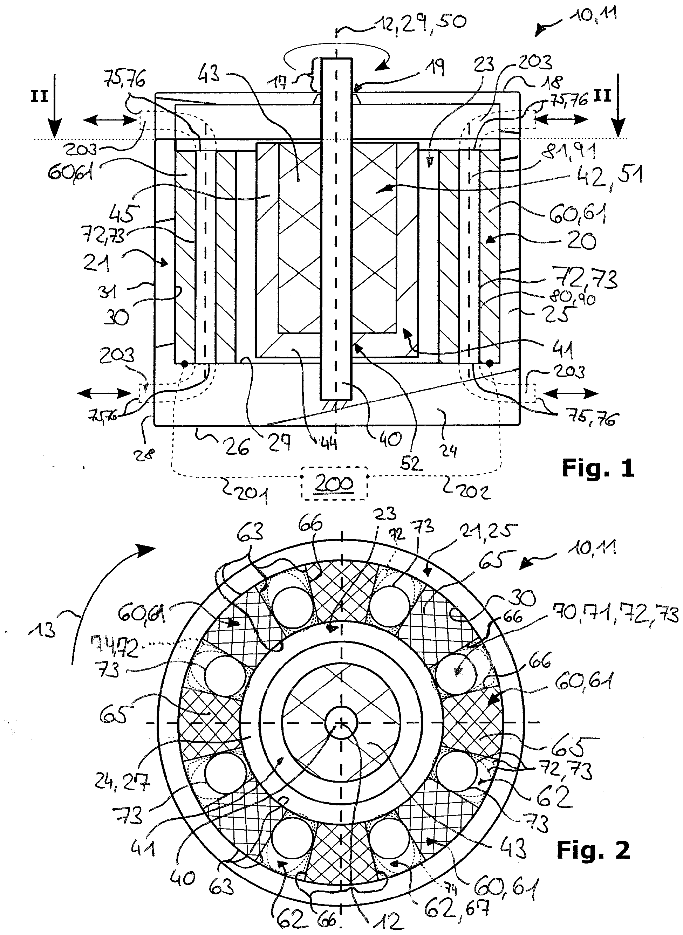

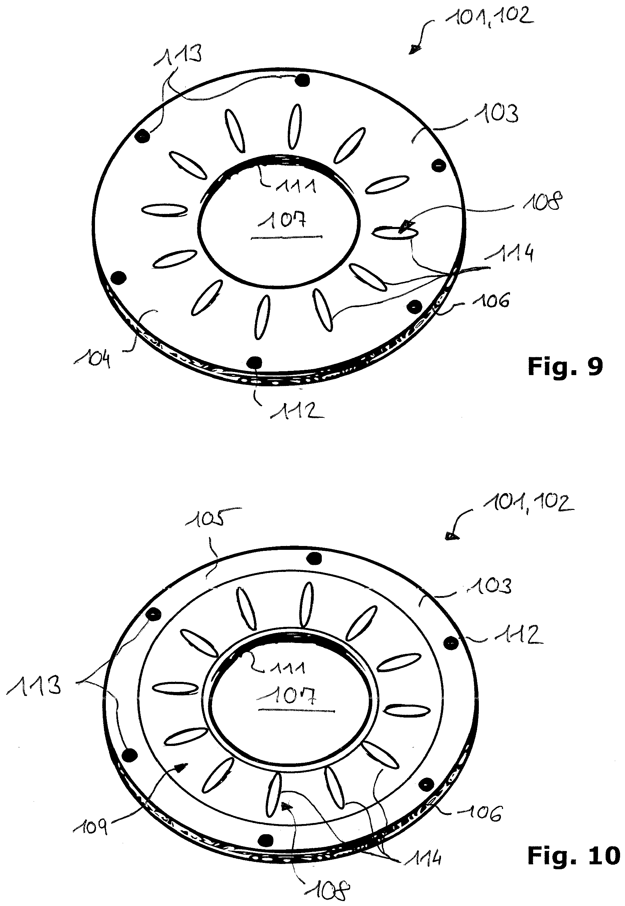

Die Figuren 1 bis 14 zeigen eine bevorzugte Ausführungsform einer elektrischen Antriebsvorrichtung 10, die wenigstens einen Elektromotor 11 umfasst, der eine in einem Gehäuse 21 angeordnete Statoranordnung 20 und eine Ankeranordnung 42 aufweist.

Antriebsvorrichtungen 10, insbesondere elektrische Antriebsvorrichtungen 10, werden vorzugsweise im Bereich der Kraftfahrzeugtechnik oder anderen technischen Gebieten eingesetzt, um ein Antriebsmoment und eine Antriebsbewegung bereitzustellen. Beispielsweise werden derartige Antriebsvorrichtungen 10 gerne zum Antreiben eines in der Zeichnung nicht dargestellten Stellglieds herangezogen. Bei den Stellgliedern kann es sich um Ventile, Wastegate-Ventile, Drosselklappen oder sogar Scheibenwischer handeln.

Das Gehäuse 21 ist zweckmäßigerweise von topfartiger Gestalt und begrenzt eine Topfaufnahme 23, die zum Aufnehmen der Statoranordnung 20 dient. Das Gehäuse 21 weist beispielsweise einen Gehäuseboden 24 und eine Gehäusewand 25 auf, wobei der Gehäuseboden 24 und die Gehäusewand 25 beispielsweise jeweils aus einem Metallmaterial oder einem Kunststoffmaterial hergestellt sein können. Jedenfalls hat der Gehäuseboden 24 exemplarisch eine Gehäusebodenrückfläche 26 und eine dazu entgegengesetzt orientierte Gehäusebodenvorderfläche 27, wobei die Gehäusebodenrückfläche 26 und die Gehäusebodenvorderseite 27 insbesondere zwei zueinander parallel ausgerichtete Großflächen sind.

Der Gehäuseboden 24 weist ferner eine ihn nach außen hin radial abschließende Gehäuseboden-Mantelfläche 28 auf. Der Gehäuseboden 24 ist weiterhin vorzugsweise von zylindrische gestaltet, in der Art, dass die Gehäusebodenrückfläche 26 und die Gehäusebodenvorderseite 27 einen Zylinderkörper bilden, der zweckmäßigerweise von runder, ovaler oder vieleckiger Gestalt sein kann.
Die Gehäusebodenrückfläche 26 und die Gehäusebodenvorderseite 27 können rund, ovalen oder vieleckige Großflächen sein.

Jedenfalls ragt von dem Gehäuseboden 24 die beschriebene Gehäusewand 25 weg, so dass zwischen dem Gehäuseboden 24 und der Gehäusewand 25, vorzugsweise zwischen einer Gehäusewand-Innenmantelfläche 30 der Gehäusewand 25 und der Gehäusebodenvorderseite 27 des Gehäusebodens 24, die Topfaufnahme 23 gebildet ist.

Wie in Fig. 1 zu erkennen ist, definiert das kreisrunde, ovale oder vieleckige zylindrische Gehäuse 21 eine Gehäuselängsachse 29, bezüglich der die Gehäusewand 25 und/oder die Gehäusewand-Innenmantelfläche 30 vorzugsweise äquidistant ist. In diesem Zusammenhang ist es auch möglich und von Vorteil, wenn eine Gehäusewand-Außenmantelfläche 31 parallel zur Gehäuselängsachse 29 angeordnet ist und sowohl die Gehäusebodenrückfläche 26 als auch die Gehäusebodenvorderfläche 27 orthogonal bezüglich der Gehäuselängsachse 29 orientiert sind. Auf diese Weise kann ein vorteilhaftes topfförmiges Gehäuse 21 zur Aufnahme der Statoranordnung 20 bereitgestellt werden.

Es ist vorgesehen, dass an dem Gehäuse 21, insbesondere an der Gehäusewand 25, eine Rotorachse 40 angeordnet sein kann. Die Rotorachse 40 ist vorzugsweise ortsfest am Gehäuse 21 oder an der Gehäusewand 25 angeordnet und definiert entlang ihrer Haupterstreckungsrichtung eine Drehlängsachse 12. In diesem Zusammenhang ist es beispielsweise vorteilhaft und insbesondere gemäß der Fig. 1 zu erkennen, dass die Drehlängsachse 12 und die Gehäuselängsachse 29 sozusagen parallel und insbesondere koaxial angeordnet sind.

Die Rotorachse 40 ist beispielsweise ein Zylinderkörper mit kreisrundem Querschnitt bezogen auf seine Hauptausdehnungsrichtung und vorzugsweise aus einem Kunststoffmaterial oder Metallmaterial hergestellt.

Jedenfalls dient die Rotorachse 40 dazu, einen Rotor 41 aufzunehmen, in der Art, dass der Rotor 41 an der Rotorachse 40 um die Drehlängsachse 12 herum rotierbar gelagert ist. Beispielsweise verfügt der Rotor 41 über entsprechende, in der Zeichnung nicht dargestellte, Lagerkörper 52 oder Rotorlager 52.

In diesem Zusammenhang sei auch erwähnt, dass die Rotorachse 40 zweckmäßigerweise durch eine mit dem Bezugszeichen 19 bezeichnete Gehäuseöffnung durch das Gehäuse 21 hindurch ragt, um sozusagen über eine eine Großfläche definierende Gehäusestirnseite 18 abzustehen. Denkbar ist, dass an dem über die Gehäusestirnseite 18 ragenden Rotorabschnitt 17 der Rotorachse 40 beispielsweise Stellgliedbefestigungsmittel angreifen.

Jedenfalls dient der Rotor 41 dazu, die Ankeranordnung 42 dauerhaft aufzunehmen, wobei es sich bei der Ankeranordnung 42 exemplarisch um in der Fig. 1 und der Fig. 2 durch eine Kreuzschraffur angedeutete Permanentmagnete 43 oder um eine entsprechende Permanentmagnetanordnung 43 handelt, die mit der Statoranordnung 20 zusammenwirkt, um ein Antriebsmoment und eine Antriebsleistung bereitzustellen.

Der Rotor 41 ist, wie das Gehäuse 21, exemplarisch von topfartiger Gestalt und zweckmäßigerweise von zylindrischer Gestalt. Er hat eine Rotorlängsachse 50 und verfügt über einen runden, ovalen oder vieleckigen Querschnitt bezogen auf die Rotorlängsachse 50.

Der Rotor 41 definiert einen Rotorboden 44, von dem aus eine Rotorwand 45 winkelig, insbesondere orthogonal, weg ragt. Bezüglich der Rotorlängsachse 50 ist die Rotorwand 45 exemplarisch parallel und der Rotorboden 44 orthogonal orientiert. Ferner ist die Rotorlängsachse 50 parallel, insbesondere koaxial, zur Drehlängsachse 12 angeordnet.

Ferner begrenzt der Rotor 41, insbesondere zwischen dem Rotorboden 44 und der Rotorwand 45, eine Rotoraufnahme 51, die man auch als Rotoraufnahmeraum bezeichnen könnte. In der Rotoraufnahme 51 ist die Ankeranordnung 42 bzw. sind die Permanentmagnetanordnung 43 oder der Permanentmagnete 43 angeordnet.

Wie oben bereits erwähnt, ist die Statoranordnung 20 in dem Gehäuse 21 angeordnet, wobei die Statoranordnung 20 am Gehäuse 21 beispielsweise mittels nicht dargestellten Befestigungsmitteln befestigt ist, etwa Befestigungsschrauben oder einem Klebstoff. Es ist auch vorstellbar, dass das Gehäuse 21 und die Statoranordnung 20 einstückig hergestellt sind.

Jedenfalls definiert die Statoranordnung 20 einen oder mehrere sich längs der Drehlängsachse 12 erstreckende Bestückungsabschnitte 60, die jeweils zum Bestücken mit jeweils einem Statorantriebsmittel 61 der Statoranordnung 20 dienen. Die Statoranordnung 20 definiert darüber hinaus auch einen oder mehrere sich längs der Drehlängsachse 12 erstreckende freie Kanalführungsabschnitte 62.

Die Statorantriebsmittel 61 bilden sozusagen die antriebswirksame Antriebskomponente der elektrischen Antriebsvorrichtung 10, die mit der Ankeranordnung 42 zusammenwirkt, um ein Antriebsmoment und eine Antriebsleistung der elektrischen Antriebsvorrichtung 10 bereitzustellen. Jedes Statorantriebsmittel 61 hat eine Statorantriebsmittel-Mantelfläche 63, die von einer an dem jeweiligen Bestückungsabschnitt 60 angeordneten Spulenwindungsanordnung 65 gebildet ist, wobei die Spulenwindungsanordnung 65 zweckmäßigerweise eine Mehrzahl von quer zur Drehlängsachse 12 orientierte Spulenwindungen umfasst.

Grundsätzlich können die Statorantriebsmittel 61 bzw. der Stator 20 mit einer Elektromotor-Steuereinrichtung 200 gesteuert oder geregelt werden. Dazu sind beispielsweise Leitungen 201, 202 vorgesehen, die das Statorantriebsmittel 61 bzw. den Stator 20 mit der Elektromotor-Steuereinrichtung 200 elektrisch verbinden.

In Fig. 2 ist zu erkennen, dass die Statoranordnung 20 in mehrere Bestückungsabschnitte 60 und mehrere Kanalführungsabschnitte 62 unterteilt ist, die in einer Umfangsrichtung 13 um die Drehlängsachse 12 herum kreisartig alternierend angeordnet sind. Die Bestückungsabschnitte 60 und die Kanalführungsabschnitte 62 liegen dabei berührend spaltfrei aneinander an, so dass sie einen zusammenhängenden lückenlosen Kreis bilden.

Die elektrische Antriebsvorrichtung verfügt über eine Wärmetauschereinrichtung 70 zum Kühlen der elektrischen Antriebsvorrichtung 10, wobei die Wärmetauschereinrichtung 70 ein von Wärmetauscherfluid durchströmbares Fluidkanalsystem 71 definiert. Das Fluidkanalsystem 71 setzt sich seinerseits aus wenigstens einem Fluidkanal 72 zusammen in den über wenigstens eine Fluidzulauföffnung 75 Wärmetauscherfluid hineinströmen und über wenigstens eine Fluidablauföffnung 76 Wärmetauscherfluid abströmen kann.

Gemäß Fig. 1 ist zu erkennen, dass eine nicht dargestellte für die Versorgung mit Wärmetauscherfluid vorgesehene Versorgungseinrichtung über Versorgungschläuche 203 mit der Wärmetauschereinrichtung 70 verbunden ist.

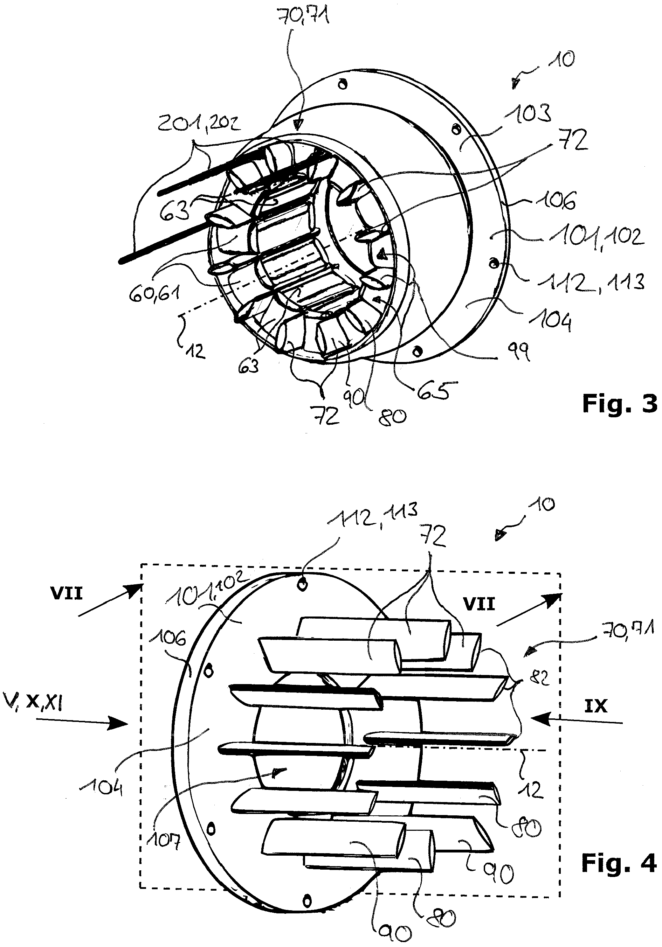

In Fig. 3 ist zu erkennen, dass sich mehrere Fluidkanäle 72 des Fluidkanalsystems 71 durch die Statoranordnung 20 erstrecken, insbesondere längs der dort gestrichelt dargestellten Drehlängsachse 12. Dabei liegt jeder Fluidkanal 72 an wenigstens einem Statorantriebsmittel 61 oder dessen Statorantriebsmittel-Mantelfläche 63 flächig berührend an, insbesondere an den Spulenwindungen 65.

In Fig. 2 ist ferner zu erkennen, dass die innerhalb der Bestückungsabschnitte 60 angeordneten Fluidkanäle 72 flächig oder vollflächig an den Statorantriebsmittel-Mantelflächen 63 anliegen, was vorliegend durch mehrere punktierte Linien dargestellt ist. Zusätzlich ist innerhalb der Bestückungsabschnitte 60 jeweils ein Fluidkanal-Rohling 73 dargestellt, wie sie im Rahmen eines Herstellverfahrens für eine Wärmetauschereinrichtung 70 in die Statoranordnung 20 eingesetzt werden. Dabei ist gut zu erkennen, dass die Fluidkanal-Rohlinge 73 im Unterschied zu den Fluidkanälen 72 lediglich punktuell an den Statorantriebsmittel 61 bzw. dessen Statorantriebsmittel-Mantelflächen 63 anliegen.

Jedenfalls definieren die Statorantriebsmittel-Mantelflächen 63 exemplarisch eine oder mehrere Statorantriebsmittel-Mantelflächen-Umfangsabschnitte 66, die jeweils in Umfangsrichtung 13 zwischen einem Bestückungsabschnitt 60 bzw. einem Statorantriebsmittel 61 und einem Kanalführungsabschnitt 62 sandwichartig angeordnet sind, sozusagen als Grenze zwischen dem Bestückungsabschnitt 60 bzw. einem Statorantriebsmittel 61 und einem Kanalführungsabschnitt 62.

In diesem Zusammenhang ist zu erwähnen, dass die Fluidkanäle 72 zweckmäßigerweise flächig oder vollflächig und/oder spaltfrei an den Statorantriebsmittel-Mantelflächen-Umfangsabschnitte 66 angelegt sind. Dies hat den Vorteil, dass die Wärmeverlustenergie relativ zügig von den Statorantriebsmitteln 61 auf das durch die Fluidkanäle 72 strömende Wärmetauscherfluid übertragen werden kann.

Was in der Fig. 2 exemplarisch durch punktierte Linien 74 dargestellt ist, zeigt, dass die Fluidkanäle 72 bezüglich der Drehlängsachse 12 jeweils einen quer orientierte Fluidkanalquerschnitt 74 aufweisen. Der Fluidkanalquerschnitt 74 ist dabei zweckmäßigerweise so gestaltet, dass er mit einer Querschnittsfläche 67 eines Kanalführungsabschnittes 62 deckungsgleich ist, wodurch die größtmögliche Fläche zwischen zwei in Umfangsrichtung 13 benachbarten Statorantriebsmitteln 61 belegt ist.

Jeder Fluidkanal 72 kann als Zulaufkanal 80 oder als Rücklaufkanal 90 ausgebildet sein, wie beispielsweise in den Figuren 4, 5 und 6 zu erkennen ist. Dabei sind die Zulaufkanäle 80 und die Rücklaufkanäle 90 exemplarisch jeweils hohlzylindrisch und jeweils von einen rundem, ovalem oder vieleckigem Querschnitt bezüglich ihrer jeweiligen Hauptausdehnungsrichtung.

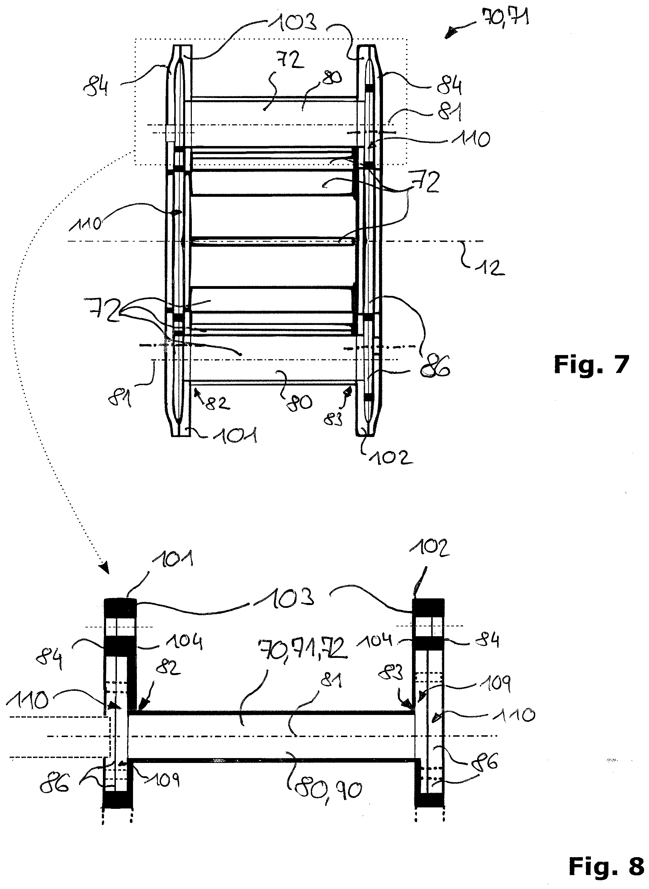

Wie exemplarisch in Fig. 7 zu erkennen ist, verfügen die Fluidkanäle 72 jeweils über zwei zueinander entgegengesetzt orientierte freie Enden 82, 83.

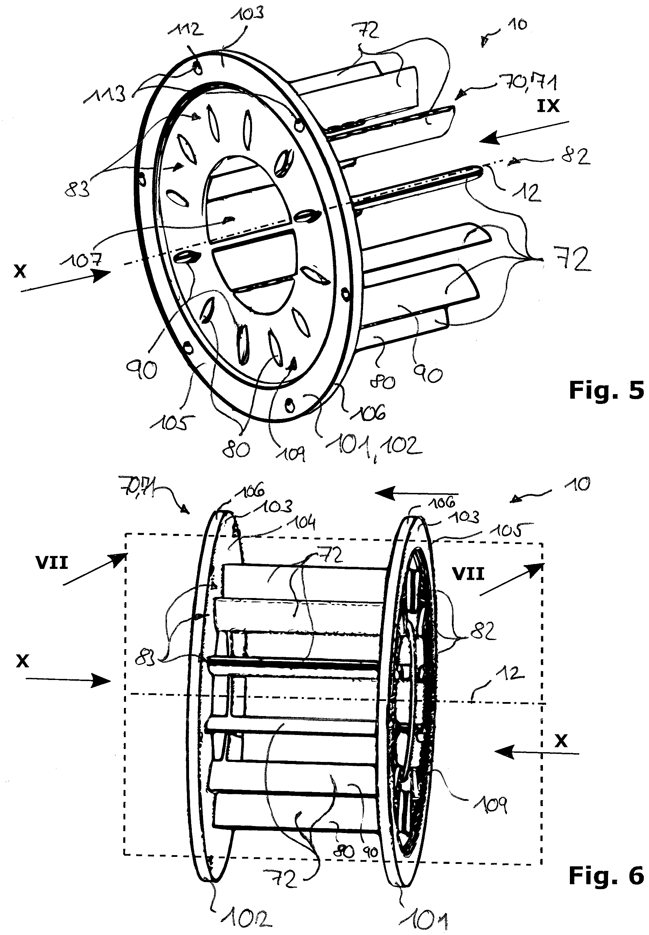

Im Betrieb der elektrischen Antriebsvorrichtung 10 sind die Zulaufkanäle 80 und die Rücklaufkanäle 90 an zwei Kanalflansche 101, 102 angeordnet, was beispielsweise in den Figuren 6 bis 8 dargestellt ist. Dabei ist vorgesehen, die Zulaufkanäle 80 an einem ersten Kanalflansch 101 und die Rücklaufkanäle 90 an einem zweiten Kanalflansch 102 anzuordnen.

Zweckmäßigerweise sind die Fluidkanäle 72 dabei jeweils mit dem ersten freien Ende 82 an einem ersten Kanalflansch 101 und mit dem zweiten freien Ende 83 an einem zweiten Kanalflansch 102 fest angeordnet oder fixiert, wobei die Fluidkanäle 72 jeweils bevorzugt stoff-, form- oder kraftschlüssig an dem jeweiligen Kanalflansch 101, 102 angeordnet sind.

Grundsätzlich ist jeder Kanalflansch 101,102 ein ringförmiger Flachkörper 103, der beispielsweise aus einem Kunststoffmaterial oder einem Metallmaterial hergestellt sein kann. Der Flachkörper 103 weist beispielsweise eine runde, ovale oder vieleckige Außengestalt auf.

Jeder Flachkörper 103 hat eine Vordergroßseite 104 sowie eine dazu entgegengesetzt orientierte Rückgroßseite 105. Zu den Seiten hin ist der Flachkörper 103 durch eine Außenschmalseite 106 abgeschlossen. Der Flachkörper 103 weist ferner eine ihn vollständig durchsetzende Zentralausnehmung 107 auf, bei der es sich exemplarisch um eine am Flachkörper 103 zentrisch angeordnete Zentralausnehmung 107 handelt. Denkbar ist allerdings, dass die Zentralausnehmung 107 am Flachkörper 103 beispielsweise exzentrisch angeordnet ist. Jedenfalls hat der Flachkörper 103 eine Innenschmalseite 111, die nach innen hin zur Zentralausnehmung 107 orientiert ist.

Jeder Flachkörper 103 weist eine Kanalflanschbefestigungsanordnung 112 auf, die einen Satz von Kanalflanschbefestigungs-Ausnehmungen 113 umfasst, die den Flachkörper 103 zweckmäßigerweise vollständig durchsetzen und zum gegenseitigen Befestigen der Flachkörper 103 dienen. Die Kanalflanschbefestigungs-Ausnehmungen 113 sind beispielsweise kranzartig und mit gleichem Abstand zueinander in einer Umfangsrichtung um den Flachkörper 103 herum entlang einer imaginären, in der Zeichnung nicht dargestellten, Kreisringlinie angeordnet.

Jeder Flachkörper 103 weist ferner eine Fluidkanalausnehmungs-Anordnung 108 auf, die einen Satz von Fluidkanalausnehmungen 114 umfasst, die den Flachkörper 103 zweckmäßigerweise vollständig durchsetzen und zum Anordnen, insbesondere zum Einstecken, von Fluidkanälen 72 dienen. Die Fluidkanalausnehmungen 114 sind mit gleichem Abstand zueinander in einer Umfangsrichtung um den Flachkörper 103 herum entlang einer in der Zeichnung nicht dargestellten imaginären Kreisringlinie angeordnet.

Wenigstens ein Flachkörper 103 weist eine an einer Rückgroßseite 105 angeordnete Ringausnehmung 109 auf, die in den Flachkörper 103 eingebracht ist und diesen nicht vollständig durchsetzt, beispielsweise lediglich bis zur Hälfte. Der Flachkörper 103 weist somit sozusagen zwei voneinander getrennte terrassenartige Großflächen auf.

Jedenfalls kann in jeweils eine Fluidkanalausnehmung 114 eines Kanalflansches 101, 102 ein Fluidkanal 72 eingesteckt sein, insbesondere ein Zulaufkanal 80 oder ein Rücklaufkanal 90. Dabei ist es zweckmäßig, wenn an dem ersten Kanalflansch 101 ein oder mehrere Zulaufkanäle 80 und Rücklaufkanäle 90 in einer alternierenden Reihenfolge und jeweils winkelig, insbesondere rechtwinkelig, zum Kanalflansch 101 und/oder der Vordergroßseite 104 oder der Rückgroßseite 105 angeordnet sind.

Die Zulaufkanäle 80 und Rücklaufkanäle 90 sind exemplarisch so am Kanalflansch 101 angeordnet, dass sie jeweils in eine der Fluidkanalausnehmungen 114 ein Stück weit eingesteckt und dort zweckmäßigerweise stoff-, form- oder kraftschlüssig gehalten sind.

Jedenfalls können dem zweiten Kanalflansch 102 ebenfalls ein oder mehrere Zulaufkanäle 80 und Rücklaufkanäle 90 zugeordnet sein, in der Art, dass die Zulaufkanäle 80 und Rücklaufkanäle 90 in die dortigen Fluidkanalausnehmungen 114 eingesteckt sind. Exemplarisch sind die Zulaufkanäle 80 und Rücklaufkanäle 90 dort ein Stück weit eingesteckt und stoff-, form- oder kraftschlüssig gehalten. Auch hierbei können die Zulaufkanäle 80 und die Rücklaufkanäle 90 orthogonal zum Kanalflansch 102 angeordnet sein, so dass im Ergebnis sozusagen ein käfigartiges Fluidkanalsystem 71 gebildet ist.

Im Betrieb der elektrischen Antriebsvorrichtung 10 ist vorgesehen, dass die die Zulaufkanäle 80 und die Rücklaufkanäle 90 tragenden Kanalflansche 101, 102 jeweils von einem Deckel 84 fluiddicht abgeschlossen sind, was exemplarisch in den Fig. 7 und 8 dargestellt ist.

Zwischen einem Kanalflansch 101, 102 und einem Deckel 84 ist dabei mindestens ein Fluidreservoir 110, wobei die am jeweiligen Kanalflansch 101, 102 angeordnete Ausnehmung 109 sozusagen das Fluidreservoir mit bildet. Zweckmäßigerweise ist das Fluidreservoir 110 also zwischen einer Rückgroßseite 105 eines Kanalflanschs 101, 102 und einer Vordergroßseite eines Deckels 84 gebildet.

Dabei sind die Zulaufkanäle 80 und die Rücklaufkanäle 90 jeweils so an den Kanalflansche 101, 102 angeordnet, dass sie mit ihren freien Enden 82, 83 in die Ausnehmung 109 hinein ragen, insbesondere die Ringausnehmung 109. Dadurch kann Wärmetauscherfluid von der ein Fluidreservoir 110 bildenden Ausnehmung 109 in die Zulaufkanäle 80 strömen und von den Rücklaufkanälen 90 sozusagen wieder zurück in die Ausnehmung 109 strömen.

Das angesprochene Fluidreservoir 110 dient daher zum Sammeln und Überströmen von Wärmetauscherfluid, was insbesondere dann von Vorteil ist, wenn an einem oder jedem Deckel 84 eine Trennstruktur 85 angeordnet ist.

Da an einem oder jedem Deckel 84 eine zusätzliche Trennstruktur 85 vorgesehen sein kann, die im auf den jeweiligen Kanalflansch 101, 102 aufgesetzten Zustand in die Ausnehmung 109, insbesondere in die Ringausnehmung 109, hineinragt und am jeweiligen Kanalflansch 101, 102 berührend anliegt, kann die Ausnehmung 109, insbesondere in die Ringausnehmung 109, sozusagen in zwei oder eine Vielzahl von Ringraumabschnitte 86 aufgeteilt werden. Die Ringraumabschnitte 86 sind dabei zweckmäßigerweise gegenseitig fluiddicht abgetrennt, so dass Wärmetauscherfluid nicht unbeabsichtigt von einem Ringraumabschnitt 86 in einen anderen Ringraumabschnitt 86 überströmen kann.

Durch die Verwendung der Trennstruktur 85 kann sozusagen der vom Wärmetauscherfluid zurückgelegte Fluidweg innerhalb der Wärmetauschereinrichtung 70 bzw. innerhalb dem Fluidkanalsystem 71 gesteuert werden.

So können die Zulaufkanäle 80 ausgehend von einer Fluidzulauföffnung des Fluidkanalsystems 71 durch einen ersten Ringraumabschnitt 86 eines ersten Kanalflansches 101 hindurch mit Wärmetauscherfluid versorgt werden, wobei das Wärmetauscherfluid dann von den Zulaufkanälen 80 aus in einen ersten Ringraumabschnitt 86 eines zweiten Kanalflansches 102 strömt, um dort in einen zweiten Ringraumabschnitt 86 des zweiten Kanalflansches 102 überzuströmen, beispielsweise durch eine dort angeordnete Überströmeinrichtung. Jedenfalls kann dann das Wärmetauscherfluid zu den Rücklaufkanälen 90 strömen und durch die Rücklaufkanäle 90 in einen zweiten Ringraumabschnitt 86 des ersten Kanalflansches 101 gelangen, um von dort zu einer Fluidablauföffnung des Fluidkanalsystems 71 zu strömen.

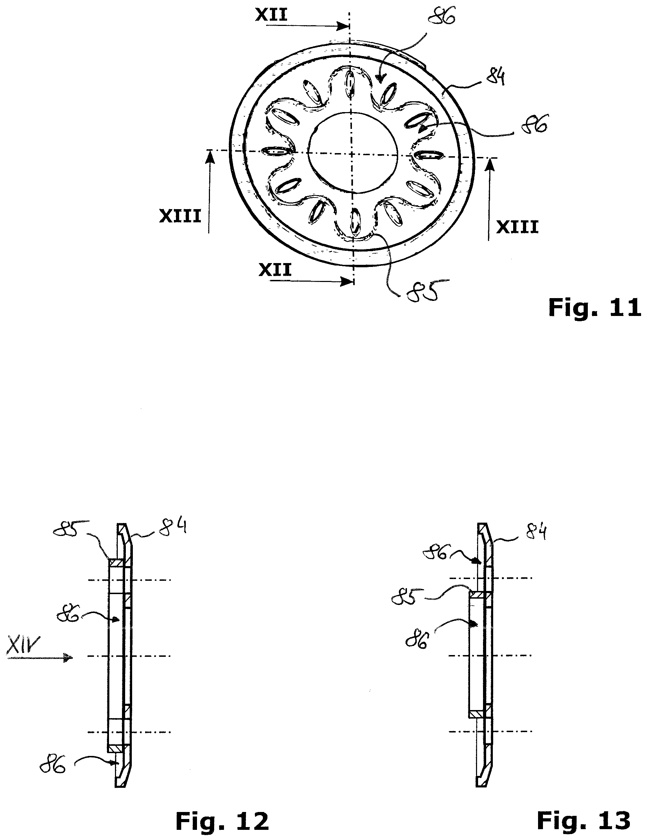

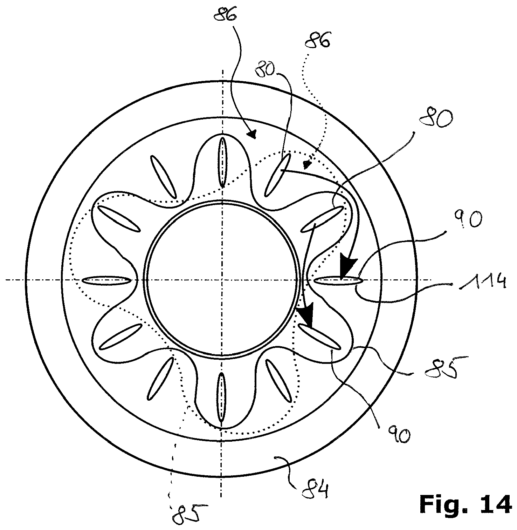

In der Fig. 11 und 14 ist exemplarisch eine Trennstruktur 85 dargestellt, die an einem Deckel 84 angeordnet ist und einen Trennsteg 87 umfasst. Wie beispielsweise gemäß Fig. 8 gut zu erkennen ist, ragt der Trennsteg 87 in die Ausnehmung 109, insbesondere die Ringsausnehmung 109 hinein, und legte berührend am jeweiligen Kanalflansch 101, 102 an. Der Trennsteg 87 ist dabei jeweils blütenartig oder mäanderartig an einem Kanalflansch 101, 102 angeordnet und umrahmt die am jeweiligen Kanalflansch 101, 102 angeordneten Fluidkanalausnehmungen 114.

In Fig. 11 und 14 ist zu erkennen, dass der Trennsteg 87 in verschiedenen Kontur-Konfigurationen vorgesehen sein kann, um den Fluidweg innerhalb der Wärmetauschereinrichtung 70 bzw. dem Fluidkanalsystem 71 zu steuern. Exemplarisch sind durch eine gepunktete Linie ein Trennsteg 87 mit insgesamt dreizackiger Kontur und durch eine durchgezogene Linie Trennsteg 87 mit insgesamt mehrzackiger Kontur dargestellt.

Ferner ist in Fig. 14 noch zu erkennen, dass Wärmetauscherfluid durch angedeutete Fluidkanalausnehmungen 114 von einem Zulaufkanal 80 zu einem Rücklaufkanal 90 überströmt. Dabei sind die gemäß Fig. 11 und 14 angedeuteten Fluidkanalausnehmungen 114 nicht tatsächlich am Deckel 84 angeordnet, sie sind lediglich imaginär zu Verdeutlichung der Funktion angedeutet und nur an den Kanalflansche 101, 102 vorgesehen.

Jeder Deckel 84 kann natürlich eine Zentralausnehmung aufweisen, die den Deckel 84 vollständig und insbesondere zentral durchsetzt.

Es ist noch zu erwähnen, dass ein Zulaufkanal 80 jeweils eine Zulauflängsachse 81 und ein Rücklaufkanal 90 jeweils eine Rücklauflängsachse 91 definieren können, die praktischerweise jeweils, wie beispielsweise in Fig. 5 und 6 gut zu erkennen ist, zueinander parallel angeordnet sind. Von Vorteil ist auch, wenn die Zulauflängsachsen 81 und die Rücklauflängsachsen 91 zueinander koaxial und parallel zur Drehlängsachse 12 orientiert und im Wesentlichen orthogonal oder orthogonal zum Kanalflansch 101, 102 angeordnet sind.

## Patentansprüche

1. Elektrische Antriebsvorrichtung (10), insbesondere für ein Kraftfahrzeug,
- mit einem Elektromotor (11), der eine Statoranordnung (20) und eine Ankeranordnung (42) aufweist,
- mit einem Gehäuse (21) zur Aufnahme der Statoranordnung (20),
- mit einer ortsfest am Gehäuse (21) angeordneten und eine Drehlängsachse (12) aufweisenden Rotorachse (40),
- mit einem an der Rotorachse (40) um die Drehlängsachse (12) rotierbar angeordneten Rotor (41) zur Aufnahme der Ankeranordnung (42),
- wobei die Statoranordnung (20) einen oder mehrere sich längs der Drehlängsachse (12) erstreckende Bestückungsabschnitte (60) jeweils zum Bestücken mit Statorantriebsmitteln (61) und einen oder mehrere sich längs der Drehlängsachse (12) erstreckende freie Kanalführungsabschnitte (62) umfasst,
**gekennzeichnet durch**,
- eine Wärmetauschereinrichtung (70) zum Austauschen von Wärmeenergie zwischen der Statoranordnung (20) und/oder der Ankeranordnung (42) einerseits und einem Wärmetauscherfluid andererseits,
- wobei die Wärmetauschereinrichtung (70) ein von dem Wärmetauscherfluid durchströmbares Fluidkanalsystem (71) umfasst, das wenigstens einen Fluidkanal (72) aufweist, der sich durch die Statoranordnung (20) erstreckt,
- wobei jeder Fluidkanal (72) an wenigstens einer Statorantriebsmittel-Mantelfläche (63) eines Statorantriebsmittels (61) berührend anliegt.

2. Antriebsvorrichtung nach Anspruch 1, **dadurch gekennzeichnet,**
**dass** jeder Fluidkanal (72) spaltfrei an einer Statorantriebsmittel-Mantelfläche (63) berührend anliegt.

3. Antriebsvorrichtung nach Anspruch 1 oder 2, **dadurch gekennzeichnet,**
**dass** mehrere Kanalführungsabschnitte (62) und mehrere Bestückungsabschnitte (60) in einer Umfangsrichtung (13) um die Drehlängsachse (12) herum alternierend aneinander berührend angeordnet sind, wobei jeder Kanalführungsabschnitt (62) einen Fluidkanal (72) aufweist.

4. Antriebsvorrichtung nach einem der vorhergehenden Ansprüche, **dadurch gekennzeichnet,**
**dass** jeder Fluidkanal (72) flächig oder vollflächig an mindestens einem Statorantriebsmittel-Mantelflächen-Umfangsabschnitt (66) einer der Statorantriebsmittel-Mantelflächen (63) anliegt, wobei jeder Statorantriebsmittel-Mantelflächen-Umfangsabschnitt (66) in einer Umfangsrichtung (13) um die Drehlängsachse (12) herum sandwichartig zwischen einem Bestückungsabschnitt (60) einerseits und einem Kanalführungsabschnitt (62) andererseits angeordnet ist.

5. Antriebsvorrichtung nach einem der vorhergehenden Ansprüche, **dadurch gekennzeichnet,**
- **dass** ein Fluidkanal (72) jeweils von hohlzylindrischer Gestalt ist und einen durchgängig vollständig kreisringartigen, runden, ovalen oder vieleckigen Querschnitt bezogen auf seine Hauptausdehnungsrichtung aufweist und/oder
- **dass** wenigstens ein Fluidkanal (72) von einem dünnwandigen Kunststoff-Rohrkanalkörper gebildet ist der wenigstens aus Kunststoffmaterial hergestellt ist, insbesondere aus einem Thermoplastmaterial.

6. Antriebsvorrichtung nach einem der vorhergehenden Ansprüche, **dadurch gekennzeichnet,**
**dass** das Fluidkanalsystem (71) wenigstens eine Fluidzulauföffnung (75) und wenigstens eine Fluidablauföffnung (76) umfasst, wobei durch die Fluidzulauföffnung (75) hindurch Wärmetauscherfluid an wenigstens einem Fluidkanal (72) bereitgestellt werden kann, wobei durch die Fluidablauföffnung (76) hindurch aus einem Fluidkanal (72) abströmendes Wärmetauscherfluid abgeführt werden kann und dass zwischen einer Fluidzulauföffnung (75) des Fluidkanalsystems (71) und wenigstens einem Fluidkanal (72) oder und/oder zwischen einer Fluidablauföffnung (76) des Fluidkanalsystems (71) und wenigstens einem Fluidkanal (72) ein Fluidreservoir (110) zum Sammeln und Zwischenspeichern von Wärmetauscherfluid angeordnet ist.

7. Antriebsvorrichtung nach einem der vorhergehenden Ansprüche, **dadurch gekennzeichnet,**
**dass** ein oder mehrere Fluidkanäle (72) an einem oder zwei Kanalflansche (101, 102) angeordnet sind.

8. Antriebsvorrichtung nach Anspruch 7, **dadurch gekennzeichnet,**
**dass** die Fluidkanäle (72) jeweils zwei zueinander entgegengesetzt orientierte freie Enden (82, 83) aufweisen, wobei die Fluidkanäle (72) jeweils mit einem ersten freien Ende (82) an einem ersten Kanalflansch (101) und mit einem zweiten freien Ende (83) an einem zweiten Kanalflansch (102) angeordnet sind, wobei die Fluidkanäle (72) jeweils stoff-, form- oder kraftschlüssig an dem jeweiligen Kanalflansch (101, 102) angeordnet sind.

9. Antriebsvorrichtung nach Anspruch 7 oder 8, **dadurch gekennzeichnet,**
- **dass** die an einem oder zwei Kanalflansche (101, 102) angeordneten Fluidkanäle (72) einen Satz von Zulaufkanälen (80) und einen Satz von Rücklaufkanälen (90) bilden, wobei durch die Zulaufkanäle (80) hindurch Wärmetauscherfluid in das Fluidkanalsystems (71) hinein strömen kann, wobei durch die Rücklaufkanäle (90) hindurch Wärmetauscherfluid aus dem Fluidkanalsystem (71) abströmen kann und/oder
- **dass** die Zulaufkanäle (80) und die Rücklaufkanäle (90) jeweils ein erstes und ein zweites freies Ende (82, 83) aufweisen, wobei die Zulaufkanäle (80) und die Rücklaufkanäle (90) mit jeweils einem ersten freien Ende (82) entlang einer an einem ersten Kanalflansch (101) angeordneten imaginären Kanalflansch-Kreislinie mit gegenseitigem Abstand zueinander in Umfangsrichtung der imaginären Kanalflansch-Kreislinien angeordnet sind, wobei die Zulaufkanäle (80) und die Rücklaufkanäle (90) mit jeweils einem zweiten freien Ende (83) entlang einer an einem zweiten Kanalflansch (102) angeordneten imaginären Kanalflansch-Kreislinie mit gegenseitigem Abstand zueinander in Umfangsrichtung der imaginären Kanalflansch-Kreislinien angeordnet sind und/oder
- **dass** die Zulaufkanäle (80) und die Rücklaufkanäle (90) jeweils winkelig, insbesondere rechtwinkelig, an den Kanalflansche (101, 102) angeordnet sind.

10. Antriebsvorrichtung nach Anspruch 7 bis 9, **dadurch gekennzeichnet,**
**dass** an wenigstens einem oder an jedem Kanalflansch (101, 102) eine den jeweiligen Kanalflansch (101, 102) vollständig durchsetzende Zentralausnehmung (107) angeordnet ist, wobei ein oder jeder Kanalflansch (101, 102) eine Ausnehmung (109), insbesondere eine Ringausnehmung (109), aufweist, die den jeweiligen Kanalflansch (101, 102) von einer Vordergroßseitenfläche (104) oder einer Rückgroßseitenfläche (105) des jeweiligen Kanalflansches (101, 102) her teilweise durchsetzt.

11. Antriebsvorrichtung nach Anspruch 10, **dadurch gekennzeichnet,**
- **dass** die Ausnehmung (109), insbesondere die Ringausnehmung (109), einen runden, ovalen oder vieleckigen Querschnitt aufweist, wobei die Ausnehmung (109), insbesondere die Ringausnehmung (109), ein mit den Zulaufkanälen (80) und den Rücklaufkanälen (90) fluidisch in Verbindung stehendes Fluidreservoir (110) zum Sammeln und Überströmen von Wärmetauscherfluid bildet oder
- **dass** die Zulaufkanäle (80) und die Rücklaufkanäle (90) jeweils so an den Kanalflansche (101, 102) angeordnet sind, dass sie mit ihren freien Enden in die Ausnehmung (109), insbesondere die Ringausnehmung (109), des Kanalflanschs (101, 102) hinein ragen, so dass Wärmetauscherfluid von der ein Fluidreservoir (110) bildenden Ausnehmung (109) in die Zulaufkanäle (80) strömen und von den Rücklaufkanälen (90) zurück in die Ausnehmung (109) strömen kann.

12. Antriebsvorrichtung nach Anspruch 7 bis 11, **dadurch gekennzeichnet, dass** die Zulaufkanäle (80) und die Rücklaufkanäle (90) im Betrieb der Antriebsvorrichtung (10) jeweils im Wesentlichen parallel oder parallel zueinander und/oder zur Drehlängsachse (12) angeordnet sind und dass der erste und zweite Kanalflansch (101, 102) im Wesentlichen orthogonal oder orthogonal zur Drehlängsachse (12) angeordnet sind, um ein käfigartiges Fluidkanalsystem (71) zu bilden.

13. Antriebsvorrichtung nach Anspruch 7 bis 12, **dadurch gekennzeichnet, dass** an einem oder jedem Kanalflansch (101, 102) ein Deckel (84) angeordnet ist, der ringsum spaltfrei und fluiddicht am jeweiligen Kanalflansch (101, 102) anliegt, wobei zwischen einem oder jedem Deckel (84) und dem jeweiligen Kanalflansch (101, 102) eine ein Fluidreservoir (110) bildende Ausnehmung (109), insbesondere eine Ringausnehmung (109), begrenzt ist, die mit den Zulaufkanälen (80) und den Rücklaufkanälen (90) fluidisch in Verbindung steht.

14. Antriebsvorrichtung nach Anspruch 13, **dadurch gekennzeichnet,**
- **dass** an einem oder jedem Deckel (84) eine Trennstruktur (85) angeordnet ist, die im auf den jeweiligen Kanalflansch (101, 102) aufgesetzten Zustand in die Ausnehmung (109), insbesondere in die Ringausnehmung (109), hineinragt und am jeweiligen Kanalflansch (101, 102) berührend anliegt, so dass eine zwischen dem Deckel (84) und dem jeweiligen Kanalflansch (101, 102) angeordnete Ausnehmung (109), insbesondere die Ringausnehmung (109), in wenigstens zwei voneinander getrennte Ringraumabschnitte (86) aufgeteilt ist, so dass die Zulaufkanäle (80) ausgehend von einer Fluidzulauföffnung (75) des Fluidkanalsystems (71) durch einen ersten Ringraumabschnitt (86) eines ersten Kanalflansches (101) hindurch mit Wärmetauscherfluid versorgbar sind, wobei das Wärmetauscherfluid von den Zulaufkanälen (80) in einen ersten Ringraumabschnitt (86) eines zweiten Kanalflansches (102) strömt, um dort in einen zweiten Ringraumabschnitt des zweiten Kanalflansches (102) überzuströmen, so dass das Wärmetauscherfluid zu den Rücklaufkanäle (90) strömen und durch die Rücklaufkanäle (90) in einen zweiten Ringraumabschnitt (86) des ersten Kanalflansches (101) gelangen kann, um von dort zu einer Fluidablauföffnung (76) des Fluidkanalsystems (71) zu strömen und/oder
- **dass** die Trennstruktur einen am Deckel (84) angeordneten Trennsteg (87) umfasst, der die am jeweiligen Kanalflansch (101, 102) angeordneten Fluidkanäle (72) jeweils blütenartig oder mäanderartig umrahmt.

15. Herstellverfahren für eine Wärmetauschereinrichtung (), insbesondere zur Verwendung bei einer Antriebsvorrichtung (10) nach einem der vorhergehenden Ansprüche, umfassend
- eine Wärmetauschereinrichtung (70),
- ein von dem Wärmetauscherfluid durchströmbares Fluidkanalsystem (71) mit wenigstens einem Fluidkanal (72) mit den Schritten:
1) Einsetzen eines Satzes von aus einem Kunststoffmaterial, insbesondere einem Thermoplast, hergestellten Fluidkanal-Rohlingen (73) in freie Kanalführungsabschnitte (62) einer Statoranordnung (20) der elektrischen Antriebsvorrichtung (10),
2) Erwärmen der Fluidkanal-Rohlinge (73), bis diese jeweils über die jeweilige Glasübergangstemperatur erwärmt sind,
3) Beaufschlagen der Fluidkanal-Rohlinge (73) mit Innendruck, so dass sich diese jeweils bezüglich ihrer Hauptausdehnungsrichtung radial oder quer aufweiten,
4) Aufrechthalten des Innendrucks in den Fluidkanal-Rohlingen (73), bis eine oder alle Fluidkanal-Rohlinge (73) an Statorantriebsmittel-Mantelflächen (63) von Statorantriebsmitteln (61) der Statoranordnung (20) flächig berührend anliegen,
5) Abkühlen der Fluidkanal-Rohlinge (73),
6) Anspritzen eines ersten Kanalflanschs (101) an ein erstes freies Ende (82) der Fluidkanal-Rohlinge (73),
7) Anspritzen eines zweiten Kanalflanschs (102) an ein zweites freies Ende (83) der Fluidkanal-Rohlinge (73),
8) Anordnen und fixieren jeweils eines eine Trennstruktur (85) tragenden Deckels (84) an dem ersten und zweiten Kanalflansch (101, 102).
